# EUROPEAN PATENT APPLICATION

(11) **EP 3 040 928 A1**
(43) Date of publication of application: **06.07.2016**
(21) Application number: 14200374.8
(22) Date of filing: 29.12.2014
(51) Int. Cl.: G06Q 30/06

(54) **Funding of a purchase element by a by way of a point of sale terminal**

(71) Applicant: Nokia Technologies OY, 02610 Espoo (FI)
(72) Inventor: Leppänen, Jussi, 33580 Tampere (FI); Eronen, Antti, 33820 Tampere (FI); Lehtiniemi, Arto, 33880 Lempäälä (FI)
(74) Representative: Nokia Corporation

(57) **Abstract**

A method comprising receiving information indicative of a first purchase element from a point of sale terminal, causing display of a first purchase element representation that represents the first purchase element, causing display of a first financial account representation that represents a first financial account, receiving information indicative of a first drag input from the first purchase element representation to the first financial account representation, receiving information indicative of a second purchase element from the point of sale terminal, causing display of a second purchase element representation that represents the second purchase element, receiving information indicative of a payment performance input, and causing performance of a payment transaction, by way of the point of sale terminal, such that payment of the first purchase element is funded by the first financial account and payment of the second purchase element is funded by a second financial account is disclosed.

## Description

### TECHNICAL FIELD

The present application relates generally to funding of a purchase element by way of a point of sale terminal.

### BACKGROUND

In recent times, electronic apparatuses have become increasingly pervasive in our society. In many circumstances, a user may often interact with electronic apparatuses and/or electronic apparatus peripherals in performance of various activities, in various contexts, and/or the like. As such, it may be desirable to configure an apparatus such that a user of the apparatus may interact with the electronic apparatus, other electronic apparatuses, and/or electronic apparatus peripherals in a manner that avoids confusion and delay.

### SUMMARY

Various aspects of examples of the invention are set out in the claims.

One or more embodiments may provide an apparatus, a computer readable medium, a non-transitory computer readable medium, a computer program product, and/or a method for receiving information indicative of a first purchase element from a point of sale terminal, causing display, on a display, of a first purchase element representation that represents the first purchase element, causing display of a first financial account representation that represents a first financial account, receiving information indicative of a first drag input from the first purchase element representation to the first financial account representation, receiving information indicative of a second purchase element from the point of sale terminal, causing display of a second purchase element representation that represents the second purchase element, receiving information indicative of a payment performance input, and in response to the payment performance input, causing performance of a payment transaction, by way of the point of sale terminal, such that payment of the first purchase element is funded by the first financial account based, at least in part, on the first drag input and payment of the second purchase element is funded by a second financial account.

One or more embodiments may provide an apparatus, a computer readable medium, a computer program product, and/or a non-transitory computer readable medium having means for receiving information indicative of a first purchase element from a point of sale terminal, means for causing display, on a display, of a first purchase element representation that represents the first purchase element, means for causing display of a first financial account representation that represents a first financial account, means for receiving information indicative of a first drag input from the first purchase element representation to the first financial account representation, means for receiving information indicative of a second purchase element from the point of sale terminal, means for causing display of a second purchase element representation that represents the second purchase element, means for receiving information indicative of a payment performance input, and in response to the payment performance input, means for causing performance of a payment transaction, by way of the point of sale terminal, such that payment of the first purchase element is funded by the first financial account based, at least in part, on the first drag input and payment of the second purchase element is funded by a second financial account.

An apparatus comprising at least one processor and at least one memory, the memory comprising machine-readable instructions, that when executed cause the apparatus to perform receipt of information indicative of a first purchase element from a point of sale terminal, causation of display, on a display, of a first purchase element representation that represents the first purchase element, causation of display of a first financial account representation that represents a first financial account, receipt of information indicative of a first drag input from the first purchase element representation to the first financial account representation, receipt of information indicative of a second purchase element from the point of sale terminal, causation of display of a second purchase element representation that represents the second purchase element, receipt of information indicative of a payment performance input, and in response to the payment performance input, causation of performance of a payment transaction, by way of the point of sale terminal, such that payment of the first purchase element is funded by the first financial account based, at least in part, on the first drag input and payment of the second purchase element is funded by a second financial account.

In at least one example embodiment, the purchase element representation comprises at least one of a purchase identifier representation or a purchase amount representation by way of at least one of textual information, graphical information, color information, icon information, and/or symbol information.

In at least one example embodiment, the purchase element representation is a visual representation configured to visually designate a particular purchase element.

In at least one example embodiment, a purchase element comprises a purchase item identifier and a purchase amount.

In at least one example embodiment, the purchase item identifier designates an item to be purchased by the payment transaction for the purchase amount.

In at least one example embodiment, a financial account representation represents a financial account by way of at least one of textual information, graphical information, color information, icon information, and/or symbol information.

In at least one example embodiment, a financial account designates at least one of a particular budgetary account or a particular payment vehicle.

In at least one example embodiment, the first drag input comprises a selection input, a movement input, and a deselection input.

In at least one example embodiment, the selection input corresponds with the first purchase element representation, and the deselection input corresponds with the first financial account representation.

In at least one example embodiment, the payment performance input is an input configured to cause performance of the payment transaction.

In at least one example embodiment, receipt of information of the payment performance input comprises causation of display of a payment interface element, and receipt of information indicative of selection of the payment interface element.

In at least one example embodiment, the payment transaction comprises approval for collection of funds in exchange for purchase elements.

In at least one example embodiment, the causation of performance of the payment transaction comprises sending, to the point of sale terminal, of a payment transaction directive that designates payment for the first purchase element from the first financial account based, at least in part, on the first drag input, and designates payment for the second purchase element from the second financial account.

In at least one example embodiment, causation of performance of a payment transaction comprises sending a payment transaction directive to the point of sale terminal.

In at least one example embodiment, wherein the payment transaction directive designates payment for each purchase element from a particular financial account.

In at least one example embodiment, the payment transaction directive comprises a purchase element payment directive that designates payment for a particular purchase element from a particular financial account.

In at least one example embodiment, the payment transaction directive comprises a first purchase element payment directive that designates payment for the first purchase element from the first financial account.

In at least one example embodiment, the payment transaction directive comprises a second purchase element payment directive that designates payment for the second purchase element from the second financial account.

In at least one example embodiment, the first financial account representation is displayed separately from the first purchase element representation.

In at least one example embodiment, the second financial account is a default financial account.

In at least one example embodiment, causation of performance of the payment transaction such that payment of the second purchase element is funded by the second financial account is performed based, at least in part, on the second financial account being the default financial account.

In at least one example embodiment, causation of performance of the payment transaction such that payment of the second purchase element is funded by the second financial account is performed absent any input that associates the second purchase element with the second financial account.

One or more example embodiments further perform causation of display of a second financial account representation that represents the second financial account, and receipt of information indicative of a second drag input from the second purchase element representation to the second financial account representation.

In at least one example embodiment, performance of the payment transaction such that payment of the second purchase element is funded by the second financial account is based, at least in part, on the second drag input. One or more example embodiments further perform causation of display of a second financial account representation that represents the second financial account such that the second financial account representation is displayed between the second purchase element representation and a second edge of the display.

In at least one example embodiment, causation of display of the first financial account representation is performed such that the first financial account representation is displayed between the first purchase element representation and a first edge of the display.

One or more example embodiments further perform receipt of information indicative of a tilt input towards the second edge of the display.

In at least one example embodiment, causation of performance of the payment transaction such that payment of the second purchase element is funded by the second financial account is based, at least in part, on the tilt input.

One or more example embodiments further perform termination of display of the first purchase element representation in response to the first drag input.

One or more example embodiments further perform receipt of information indicative of a financial account selection input that designates the first financial account representation, and causation of display of a first purchase element representation proximate to the first financial account representation in response to the financial account selection input.

In at least one example embodiment, causation of display of the first purchase element representation is performed such that the first purchase element representation at least partially overlays the first financial account representation.

One or more example embodiments further perform determination that the first purchase element is allowed for purchase with the first financial account, wherein the causation of performance of the payment transaction such that payment of the first purchase element is funded by the first financial account is based, at least in part, on the determination that the first purchase element is allowed for purchase with the first financial account.

One or more example embodiments further perform causation of establishment of a data association between the first purchase element and the first financial account.

In at least one example embodiment, the causation of performance of the payment transaction such that payment of the first purchase element is funded by the first financial account is based, at least in part, on the data association.

One or more example embodiments further perform calculating a sum of each purchase amount for each purchase element that is associated with the first financial account, and causation of display of the sum proximate to the first financial account representation.

### BRIEF DESCRIPTION OF THE DRAWINGS

For a more complete understanding of embodiments of the invention, reference is now made to the following descriptions taken in connection with the accompanying drawings in which:
FIGURE 1 is a block diagram showing an apparatus according to at least one example embodiment;
FIGURES 2A-2B are block diagrams illustrating apparatus communication according to at least one example embodiment;
FIGURES 3A-3C are diagrams illustrating transactional accounts according to at least one example embodiment;
FIGURES 4A-4H are diagrams illustrating display of purchase element representations according to at least one example embodiment;
FIGURE 5 is a flow diagram illustrating activities associated with funding of a purchase element by a financial account according to at least one example embodiment;
FIGURE 6 is a flow diagram illustrating activities associated with sending a payment transaction directive according to at least one example embodiment;
FIGURE 7 is a flow diagram illustrating activities associated with funding of a purchase element by a default financial account according to at least one example embodiment;
FIGURE 8 is a flow diagram illustrating activities associated with display of a financial account representation according to at least one example embodiment;
FIGURE 9 is a flow diagram illustrating activities associated with receipt of a tilt input according to at least one example embodiment; and
FIGURE 10 is a flow diagram illustrating activities associated with display of a purchase element representation according to at least one example embodiment.

### DETAILED DESCRIPTION OF THE DRAWINGS

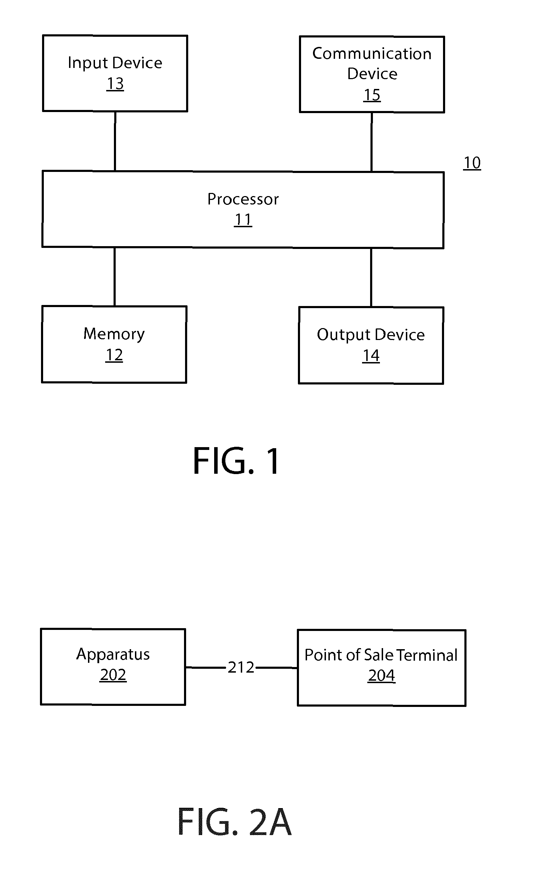

An embodiment of the invention and its potential advantages are understood by referring to FIGURES 1 through 10 of the drawings.

Some embodiments will now be described more fully hereinafter with reference to the accompanying drawings, in which some, but not all, embodiments are shown. Various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network apparatus, other network apparatus, and/or other computing apparatus.

As defined herein, a "non-transitory computer-readable medium," which refers to a physical medium (e.g., volatile or non-volatile memory device), can be differentiated from a "transitory computer-readable medium," which refers to an electromagnetic signal.

FIGURE 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from embodiments of the invention and, therefore, should not be taken to limit the scope of the invention. While electronic apparatus 10 is illustrated and will be hereinafter described for purposes of example, other types of electronic apparatuses may readily employ embodiments of the invention. Electronic apparatus 10 may be a personal digital assistant (PDAs), a pager, a mobile computer, a desktop computer, a television, a gaming apparatus, a laptop computer, a tablet computer, a media player, a camera, a video recorder, a mobile phone, a global positioning system (GPS) apparatus, an automobile, a kiosk, an electronic table, a point of sale terminal, a cash register, and/or any other types of electronic systems. Moreover, the apparatus of at least one example embodiment need not be the entire electronic apparatus, but may be a component or group of components of the electronic apparatus in other example embodiments. For example, the apparatus may be an integrated circuit, a set of integrated circuits, and/or the like.

Furthermore, apparatuses may readily employ embodiments of the invention regardless of their intent to provide mobility. In this regard, even though embodiments of the invention may be described in conjunction with mobile applications, it should be understood that embodiments of the invention may be utilized in conjunction with a variety of other applications, both in the mobile communications industries and outside of the mobile communications industries. For example, the apparatus may be, at least part of, a non-carryable apparatus, such as a large screen television, an electronic table, a kiosk, an automobile, and/or the like.

In at least one example embodiment, electronic apparatus 10 comprises processor 11 and memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types. By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing embodiments of the invention including, for example, one or more of the functions described herein. For example, processor 11 may comprise means, such as a digital signal processor device, a microprocessor device, various analog to digital converters, digital to analog converters, processing circuitry and other support circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 1 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output device 14 may comprise a visual output device, such as a display, a light, and/or the like. In at least one example embodiment, the apparatus causes display of information, the causation of display may comprise displaying the information on a display comprised by the apparatus, sending the information to a separate apparatus, and/or the like. For example, the apparatus may send the information to a separate display, to a computer, to a laptop, to a mobile apparatus, and/or the like. For example, the apparatus may be a server that causes display of the information by way of sending the information to a client apparatus that displays the information. In this manner, causation of display of the information may comprise sending one or more messages to the separate apparatus that comprise the information, streaming the information to the separate apparatus, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like. In at least one example embodiment, the apparatus receives an indication of an input. The apparatus may receive the indication from a sensor, a driver, a separate apparatus, and/or the like. The information indicative of the input may comprise information that conveys information indicative of the input, indicative of an aspect of the input indicative of occurrence of the input, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition, or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display two-dimensional information, three-dimensional information and/or the like.

In embodiments including a keypad, the keypad may comprise numeric (for example, 0-9) keys, symbol keys (for example, #, *), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise a media capturing element. The media capturing element may be any means for capturing an image, video, and/or audio for storage, display, or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software necessary for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element such as a co-processor that assists the processor 11 in processing image data and an encoder and/or decoder for compressing and/or decompressing image data. The encoder and/or decoder may encode and/or decode according to a standard format, for example, a Joint Photographic Experts Group (JPEG) standard format.

FIGURES 2A-2B are diagrams illustrating apparatus communication according to at least one example embodiment. The examples of FIGURES 2A-2B are merely examples and do not limit the scope of the claims. For example, apparatus count may vary, apparatus configuration may vary, communication channels may vary, and/or the like.

Oftentimes, when making a purchase, a user of an apparatus may interact with a point of sale terminal. A point of sale terminal may refer to an apparatus operable to facilitate payment between a purchaser and a seller of an item. For example, a user of an apparatus may purchase items from a grocery store, and a cash register may be used to facilitate payment for the items by way of a credit card, a physical currency, a check, a third party payment provider, and/or the like. In another example, a user of an apparatus may purchase items from an online retailer, and a server may be used to facilitate payment for the items by way of a credit card, a line of credit, a third party payment provider, and/or the like.

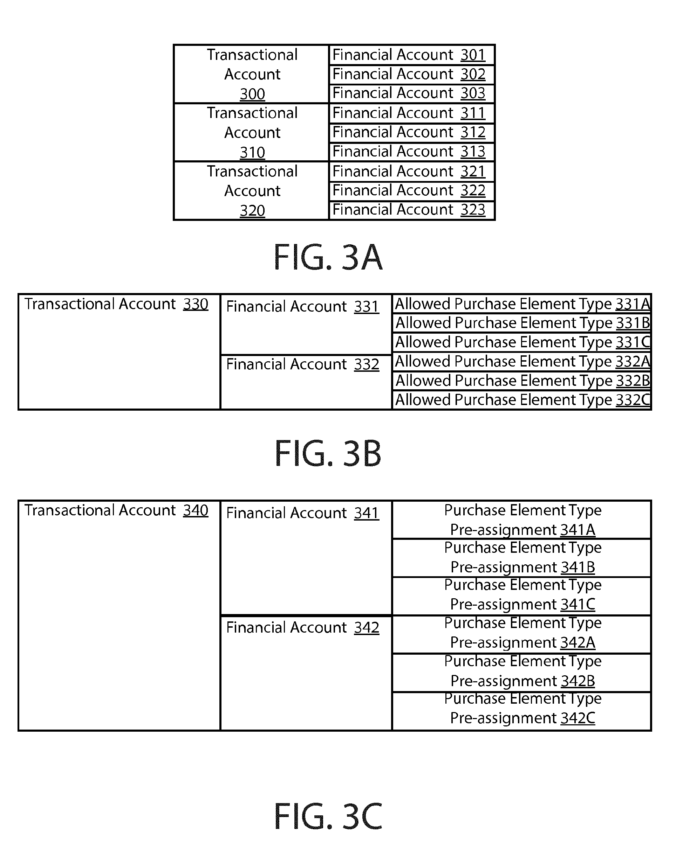

In some circumstances, a user may desire to purchase an item by way of a transactional account. A transactional account may refer to an account that authenticates the user and authorizes payment for a purchase from one or more financial accounts. In this respect, it should be understood that a transactional account does not provide the funds for a purchase. Rather, a transactional account facilitates the payment of funds from financial accounts associated with the transactional account. For example, transactional account may be similar as described in regards to FIGURES 3A-3B. In some circumstances, a transactional account may refer to an account with a mobile payment service. A mobile payment service may refer to a service that facilitates payment for products, goods, services, etc. by way of an electronic apparatus, such as a mobile phone, a tablet computer, and/or the like. In some circumstances, a transactional account may be stored, managed, and or the like on a mobile phone, on a server managed by a mobile payment service, and/or the like. Examples of mobile payment services include Apple Pay, Google Wallet, PayPal, and/or the like.

As previously described, a transactional account may facilitate payment of funds from a financial account. A financial account may refer to an account that provides funds from a designated source. For example, a financial account may designate a particular budgetary account or a particular payment vehicle as a designated source of funds. A budgetary account may refer to an account from a budget, such as a personal budget, a corporate budget, a government budget, and/or the like. For example, an account from a personal budget may be an account designated as "groceries," "entertainment," etc., an account from a corporate budget may be an account designated as "fuel expenses," "office supplies," etc., and/or the like. A payment vehicle may refer to a form of payment, such as a checking account, a credit account, a savings account, a charge account, a cryptocurrency such as Bitcoin or Litecoin, and/or the like. For example, a payment vehicle may be an account with a bank, a credit union, a financial services provider, and/or the like. In some circumstances, a budgetary account may source funds from a particular payment vehicle. For example, a personal budgetary account may source funds from a personal debit account, a business budgetary account may source funds from a business charge account, and/or the like. In at least one example embodiment, a financial account designates at least one of a particular budget account or a particular payment vehicle.

In many circumstances, a user may desire to communicate with a point of sale terminal by way of an electronic apparatus. For example, the user may desire to send and/or receive messages, interact with, send and/or receive information, and/or the like with a point of sail terminal. For instance, a user may desire to send transactional account information to the point of sale terminal. In order to facilitate such an experience, in many circumstances, it may be desirable to allow for communication between an apparatus and a point of sale terminal. In such an example, each of the apparatus and/or the point of sale terminal may be a phone, a tablet, a computer, a laptop, an electronic apparatus, a server, a wearable apparatus, a head mounted apparatus, a projector, a near eye display, a cash register, and/or the like. In at least one example embodiment, an apparatus and a point of sale terminal communicate via a direct communication channel, an indirect communication channel, and/or the like. In such an example embodiment, the indirect communication channel may route communication between the apparatus and the point of sale terminal by way of one or more routers, switches, hubs, distribution servers, and/or the like. In at least one example embodiment, an apparatus and a point of sale terminal communicate via an indirect communication channel by way of a server. In such an example embodiment, the server may be a computer, a service platform, a repository, an application, and/or the like. For example, the server, may be configured to update an account associated with the separate apparatus such that the separate apparatus may receive information from the apparatus by way of accessing the account via the server.

In some circumstances, a user may desire to instantiate communication between an apparatus and a point of sale terminal based on proximity of the apparatus to the point of sale terminal. For example, the user may not desire for the apparatus to communicate with the point of sale terminal when the apparatus is distant from the point of sale terminal. In circumstances such as these, it may be desirable for the apparatus to instantiate communication with the point of sale terminal by way of near field communication. In at least one example embodiment, communication is instantiated between an apparatus and a point of sale terminal by way of near field communication.

FIGURE 2A is a block diagram illustrating apparatus communication according to at least one example embodiment. The example of FIGURE 2A is merely an example and does not limit the scope of the claims. For example, apparatus count may vary, apparatus configuration may vary, communication channels may vary, and/or the like.

In the example of FIGURE 2A, apparatus 202 communicates with point of sale terminal 204 by way of communication channel 212. For example, apparatus 202 may send information to point of sale terminal 204 by way of communication channel 212, apparatus 202 may receive information sent from point of sale terminal 204 by way of communication channel 212, and/or the like. It should be understood that, even though the example of FIGURE 2A illustrates a direct communication channel between apparatus 202 and point of sale terminal 204, there may be intermediate apparatuses that facilitate communication between apparatus 202 and point of sale terminal 204. For example, there may be one or more routers, hubs, switches, gateways, base stations, and/or the like, that are utilized in the communication channels between apparatus 202 and point of sale terminal 204. In addition, there may be one or more separate apparatuses and/or point of sale terminals that apparatus 202 and/or point of sale terminal 204 are in communication with. For example, apparatus 202 and/or point of sale terminal 204 may be in communication with another apparatus, a separate apparatus, a different apparatus, another point of sale terminal, a separate point of sale terminal, a different point of sale terminal, and/or the like.

In many circumstances, during communication with an apparatus and a point of sale terminal, it may be desirable for the apparatus and the point of sale terminal to share information. For example, information shared between the apparatus and the point of sale terminal may help facilitate the communication, may provide useful information to the users of the apparatus and/or the point of sale terminal, and/or the like. Information shared between the apparatus and the point of sale terminal may include information about the apparatus, information about the point of sale terminal, information about the user of the apparatus, information about the user of the point of sale terminal, and/or the like. For example, the apparatus and the point of sale terminal may share information with respect to the location of the point of sale terminal, a current operating condition of the point of sale terminal, and/or the like. In at least one example embodiment, the information shared between the apparatus and the point of sale terminal comprises an image. For example, the apparatus and the separate apparatus may share an image that was captured by the apparatus and/or the point of sale terminal similar as described regarding FIGURE 1. In some circumstances, a plurality of apparatuses and/or point of sale terminals may share information by way of local communication among the apparatuses and/or point of sale terminals. For example, the apparatuses and/or point of sale terminals may share information by way of low power radio frequency communication, a radio frequency communication, near field communication, inductive communication, electric field communication, Bluetooth communication, infrared communication, local area network communication, wireless local area network communication, local port communication, input/output port communication, and/or the like. In some circumstances, apparatuses and/or point of sale terminals may share information by way of non-local communication among the apparatuses and/or point of sale terminals. For example, the apparatuses and/or point of sale terminals may communicate by way of high power radio frequency communication, wide area network communication, internet communication, cellular network communication, and/or the like. In at least one example embodiment, an apparatus retains information associated with communication with a point of sale terminal. For example, the apparatus may comprise information associated with identifying, communicating with, authenticating, performing authentication with, and/or the like, the point of sale terminal. In this manner, the apparatus may be privileged to perform operations in conjunction with the point of sale terminal that a different apparatus may lack the privilege to perform.

In some circumstances, during apparatus communication with a point of sale terminal, the point of sale terminal may generate, determine, retrieve, and/or the like one or more purchase elements. A purchase element may refer to information, a list, an array, a data structure, etc. comprising a purchase item identifier, a purchase amount, and or the like. A purchase amount may refer to a purchase price to purchase an item, a good, a product, a service, and/or the like. For example, the purchase amount may be a wholesale price, a manufacturer's suggested retail price, a price with tax added, and/or the like. A purchase item identifier may designate an item to be purchased by a payment transaction for the purchase amount. For example, when an item to be purchased is registered at a point of sale terminal (e.g. a barcode on the item to be purchased is scanned by a barcode reader comprised by the point of sale terminal), the point of sale terminal may retrieve a purchase element for that particular item to be purchased. The purchase element may identify the product with a purchase item identifier (e.g. milk, eggs, and/or the like) and a purchase amount. In circumstances such as these, it may be desirable for the apparatus to receive information indicative of the one or more purchase elements from the point of sale terminal. For example, the apparatus may use the purchase elements to generate purchase element representations on a display, keep a tally of items purchased, verify pricing, and/or the like. In at least one example embodiment, the apparatus receives information indicative of a purchase element from a point of sale terminal.

In some circumstances, when an apparatus is communicating with a point of sale terminal, a user of the apparatus may desire to complete the purchase. For example, if the user is purchasing groceries at a point of sale terminal in a grocery store, a cashier may have completed registering the groceries with the point of sale terminal. In circumstances such as these, it may be desirable for the apparatus to cause performance of a payment transaction by way of the point of sale terminal. For example, allowing the apparatus to cause performance of the payment transaction may facilitate user control over the payment transaction, user manipulation of one or more aspects of the payment transaction, and/or the like. For example, the user may initiate the payment transaction without interaction with an operator of the point of sale terminal, the user may customize one or more aspects of the payment transaction without concern for the capabilities of the point of sale terminal, and/or the like. A payment transaction may refer to funding of items to be purchased. For example, a payment transaction may comprise an exchange of cash money between the user of the apparatus and an operator of the point of sale terminal, an electronic funds transfer, a charge to a credit line, and/or the like. In at least one example embodiment, the payment transaction comprises approval for collection of funds in exchange for the items to be purchases. For example, if the payment transaction comprises an electronic funds transfer, a bank may verify that the funds are available prior to approving collection of funds from the account. The bank may send an authorization to the point of sale terminal confirming the funds are available. In at least one example embodiment, payment of at least one purchase element is funded by one or more financial accounts.

As previously described, in some circumstances, an apparatus may cause performance of a payment transaction by way of the point of sale terminal. In some circumstances, a user of the apparatus may wish for the payment transaction to be performed in a particular manner. For example, the user may wish for the items to be purchased to be funded from a particular financial account, from multiple financial accounts, and/or the like. In circumstances such as these, it may be desirable for the apparatus to send a payment transaction directive to the point of sale terminal. A payment transaction directive may designate payment for each of the one or more purchase elements from a particular financial account. For example, the payment transaction directive may designate payment for a first purchase element from a first financial account, and may designate payment for a second purchase element from a second financial account. In at least one example embodiment, the causation of performance of the payment transaction comprises sending, to the point of sale terminal, a payment transaction directive. In at least one example embodiment, the payment transaction directive designates at least one financial account for payment for at least one purchase element. In at least one example embodiment, the payment transaction directive designates payment for each purchase element from a particular financial account.

As previously described, a payment transaction directive may designate payment for each of one or more purchase elements from a particular financial account. In circumstances such as these, it may be desirable for the payment transaction directive to comprise a purchase element payment directive. A purchase element payment directive may refer to a directive that designates payment for a particular purchase element from a particular financial account. For example, the purchase element payment directive may further comprise a first purchase element payment directive, and a second purchase element payment directive, such that the first purchase element payment directive designates payment for a first purchase element from a first financial account, and the second purchase element payment directive designates payment for a second purchase element from a second financial account. In at least one example embodiment, the payment transaction directive comprises a purchase element payment directive.

As previously described, a payment transaction directive may designate payment for each of one or more purchase elements from different financial accounts. In circumstances such as these, it may be desirable to communicate these designations to a mobile payment service provider. In this manner, the mobile payment service provider may fund the purchases from the designated financial accounts.

In some circumstances, when an apparatus is sending a payment transaction directive to a point of sale terminal, a user may not have designated a particular financial account to fund the transaction. In circumstances such as these, it may be desirable to fund the transaction by way of a default financial account. A default financial account may refer to a financial account that is used to fund at least part of a payment transaction when a particular financial account has not been designated for at least part of the transaction. A default financial account may have been previously designated by the user as a default account, determined to be the most suitable account to use as the default account by the apparatus, and/or the like. In at least one example embodiment, causation of performance of the payment transaction is performed such that payment of at least one purchase element is funded by a default financial account. For example, the apparatus may send a payment transaction directive to the point of sale terminal that designates a default financial account for payment of at least one purchase element.

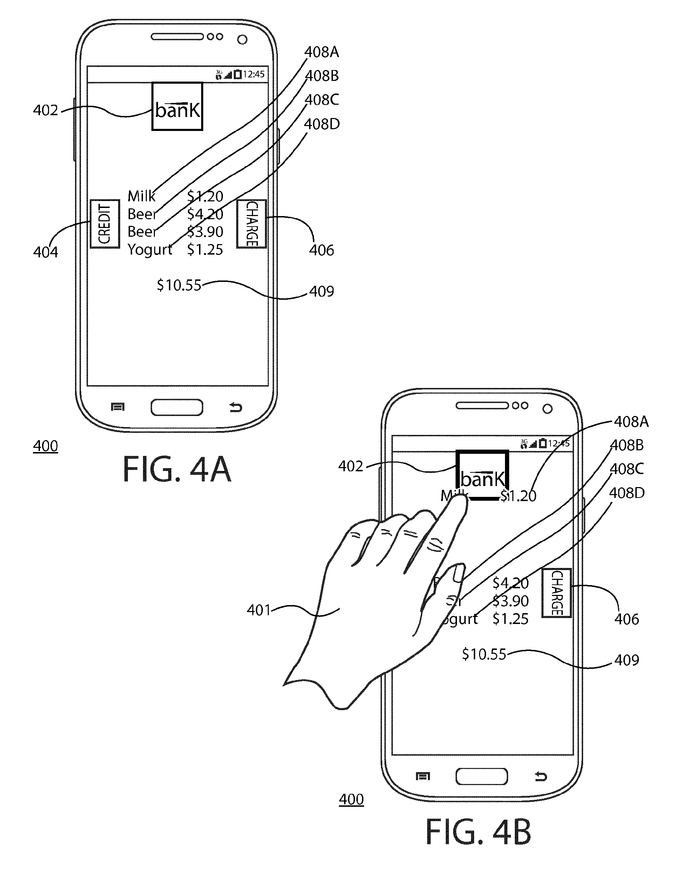

As previously described, in some circumstances, a user of an apparatus may initiate a payment transaction. In such circumstances, a user may initiate a payment transaction by a user input. For example, the user may press an icon on a touch screen comprised the apparatus, enter a voice command, press a button comprised by the apparatus, perform a gesture by way of the apparatus, and/or the like. In at least one example embodiment, the apparatus receives information indicative of a payment performance input. A payment performance input may refer to an input configured to cause performance of the payment transaction. For example, the payment performance input may be a touch input, a hover input, a gesture, and/or the like. The payment performance input may be similar as described regarding FIGURE 1 and FIGURES 4A-4H. In at least one example embodiment, the apparatus causes performance of a payment transaction in response to the payment performance input. In some circumstances, a server, such as a server managed by a mobile payment may allocate funds for the purchase prior to initiation of the payment transaction by the user.

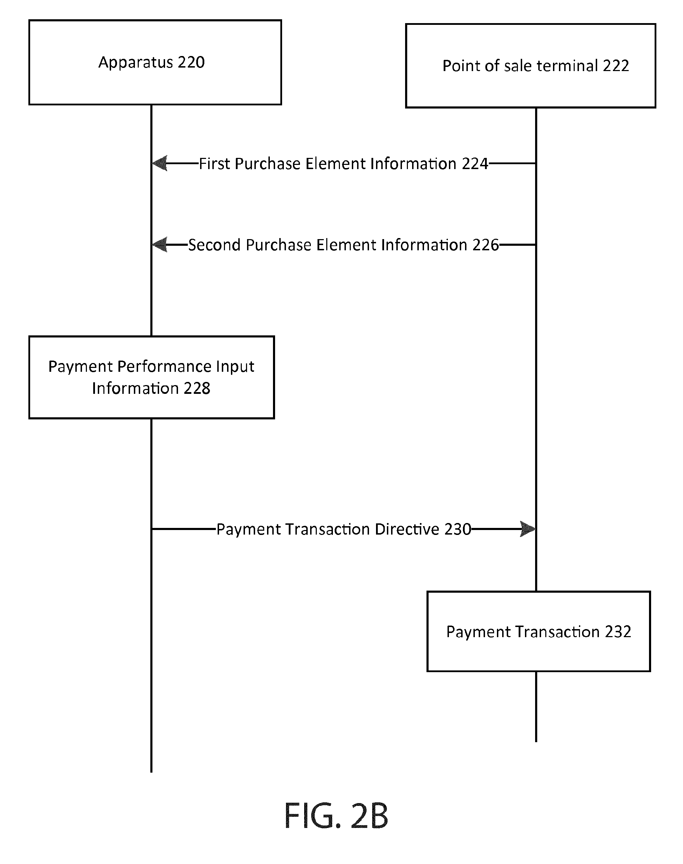

FIGURE 2B is an interaction diagram illustrating activities associated with apparatus communication according to at least one example embodiment. In at least one example embodiment, there is a set of operations that corresponds with, at least some of, the activities of FIGURE 2B. For example, there may be a set of operations associated with activities of one or more apparatuses of FIGURE 2B. An apparatus, for example electronic apparatus 10 of FIGURE 1, or a portion thereof, apparatus 202 of FIGURE 2A, or a portion thereof, or point of sale terminal 204 of FIGURE 2A, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE .

As previously described, an apparatus and a point of sale terminal may communicate. FIGURE 2B illustrates activities associated with communication between apparatus 220 and apparatus point of sale terminal 222. Apparatus 220 and/or point of sale terminal 222 may be similar as described regarding apparatus 10 of FIGURE 1, apparatus 202 of FIGURE 2A, point of sale terminal 204 of FIGURE 2A, and/or the like.

At interaction 224, apparatus 220 receives first purchase element information from point of sale terminal 222. The receipt and the purchase element information may be similar as described regarding FIGURE 1 and FIGURE 2A.

At interaction 226, apparatus 220 receives first purchase element information from point of sale terminal 222. The receipt and the purchase element information may be similar as described regarding FIGURE 1 and FIGURE 2A.

At interaction 228, apparatus 220 receives information indicative of a payment performance input. The receipt and the payment performance input may be similar as described regarding FIGURE, 1 FIGURE 2A, and FIGURES 4A-4H.

At interaction 230, apparatus 220 sends information indicative of payment transaction direction 230 to point of sale terminal 222. In this manner, point of sale terminal 222 receives the payment transaction directive from apparatus 220. The receipt and the payment transaction directive may be similar as described regarding FIGURE 1 and FIGURE 2A.

At interaction 232, point of sale terminal 222 causes performance of a payment transaction. The performance and the payment transaction may be similar as described regarding FIGURE 1 and FIGURE 2A.

FIGURES 3A-3C are diagrams illustrating transactional accounts according to at least one example embodiment. The examples of FIGURES 3A-3C are merely examples and do not limit the scope of the claims. For example, the number of accounts may vary, the types of accounts may vary, the correlations between accounts may vary, and/or the like.

As previously described, a purchase may be funded by way of a transactional account associated with one or more financial accounts. FIGURE 3A is a diagram showing transactional account and financial account association according to at least one example embodiment. The example of FIGURE 3A illustrates an embodiment of a transactional account association data structure. The transactional account association data structure of FIGURE 3A comprises information indicative of associations between transactional account 300 and financial accounts 301, 302 and 303, between transactional account 310 and financial accounts 311, 312 and 313, and between transactional account 320 and financial accounts 321, 322 and 323. For example, transactional account 300 may be a transactional account for a particular user of a mobile payment provider, and financial account 301 may be a checking account with a particular bank. As such, an association between transactional account 300 and financial account 301 has been established and stored in the transactional account association data structure of FIGURE 3A. In another example, transactional accounts 300, 310, and 320 may belong to the same user, but transactional accounts 300, 310, and 320 may be associated with different mobile payment service providers. In the example of FIGURE 3A, the data structure of FIGURE 3A may be stored on a user controlled apparatus, on a server controlled by a mobile payment service provider, and/or the like.

In some circumstances, a financial account may only be authorized for funding certain purchases. For example, if the financial account is a budgetary account designated for groceries, the financial account may be authorized to fund a purchase element type "milk" while being unauthorized to fund a purchase element type "toys." In circumstances such as these, a transactional account association data structure may comprise associations between a financial account and allowed purchase element types.

FIGURE 3B is a diagram showing a transactional account and financial account association according to at least one example embodiment. The example of FIGURE 3B illustrates an embodiment of a transactional account association data structure. The transactional account association data structure of FIGURE 3B comprises information indicative of associations between transactional account 330 and financial accounts 331 and 332. The transactional account association data structure of FIGURE 3B comprises information indicative of associations between financial account 331 and allowed purchase element types 331A, 331B, 331C, and between financial account 332 and allowed purchase element types 332A, 332B, 332C. For example, transactional account 330 may be a transactional account for a particular user of a mobile payment provider, financial account 331 may be a budgetary account with a particular allowed purchases, and allowed purchase element type 331A may be a particular purchase element such as "milk." As such, an association between transactional account 330, financial account 331, and allowed purchase element type 331A has been established and stored in the transactional account association data structure of FIGURE 3B.

It can be understood that an apparatus, such as a mobile phone, a point of sale terminal, a server, and/or the like may utilize a transactional account association data structure such as the transactional account association data structure of FIGURE 3B to determine if a purchase element is allowed for purchase from a particular financial account. For example, allowed purchase element type 331A of FIGURE 3B may allow for funding a purchase of milk with financial account 331, but financial account 331 may lack an allowed purchase element type corresponding to beer. In circumstances such as these, the apparatus may allow a purchase of milk to be funded by financial account 331, and deny funding of a purchase of beer from financial account 331. In at least one example embodiment, an apparatus determines that a purchase element is allowed for purchase with a particular financial account. In at least one example embodiment, causation of performance of the payment transaction such that payment of a particular purchase element is funded by a particular financial account is based, at least in part, on the determination that the particular purchase element is allowed for purchase with the particular financial account.

In some circumstances, a financial account may be previously assigned for funding certain purchases. For example, if the financial account is a budgetary account designated for groceries, the financial account may be pre-assigned to fund a purchase element types "milk," "sugar," "bread," and/or the like. In circumstances such as these, a transactional account association data structure may comprise associations between a financial account and purchase element type pre-assignments.

FIGURE 3C is a diagram showing a transactional account and financial account association according to at least one example embodiment. The example of FIGURE 3C illustrates an embodiment of a transactional account association data structure. The transactional account association data structure of FIGURE 3C comprises information indicative of associations between transactional account 340 and financial accounts 341 and 342. The transactional account association data structure of FIGURE 3C comprises information indicative of associations between financial account 341 and purchase element type pre-assignments 341A, 341B, 341C, and between financial account 342 and purchase element type pre-assignments 342A, 342B, 342C. For example, transactional account 340 may be a transactional account for a particular user of a mobile payment provider, financial account 341 may be a budgetary account with a particular pre-assigned purchases, and purchase element pre-assignment 341A may be a particular purchase element such as "bread." As such, an association between transactional account 340, financial account 341, and purchase element type pre-assignment 341A has been established and stored in the transactional account association data structure of FIGURE 3C.

It can be understood that an apparatus, such as a mobile phone, a point of sale terminal, a server, and/or the like may utilize a transactional account association data structure such as the transactional account association data structure of FIGURE 3C to determine if a purchase element is assigned for funding from a particular financial account. In at least one example embodiment, an apparatus causes establishment of a data association between a particular purchase element and a particular financial account. For example, purchase element pre-assignment 341B of FIGURE 3C may designate for funding a purchase of milk with financial account 341, while purchase element pre-assignment 342A of FIGURE 3C may designate for funding a purchase of beer with financial account 342. In circumstances such as these, the apparatus may determine a purchase of milk may be funded by financial account 341, and determine a purchase of beer may be funded by financial account 342. In at least one example embodiment, causation of performance of payment transaction such that payment of a particular purchase element is funded by a particular financial account is based, at least in part, on the data association.

FIGURES 4A-4H are diagrams illustrating display of purchase element representations according to at least one example embodiment. The examples of FIGURES 4A-4H are merely examples and do not limit the scope of the claims. For example, the number of purchase elements may vary, the type of purchase elements may vary, the display may vary, the design, configuration, arrangement, etc. of the various representations may vary, and/or the like.

As previously described, an apparatus may interact with a point of sale terminal to cause performance of various payment transactions. In circumstances such as these, it may be desirable to display information related to the transactions on the apparatus. For example, a user may find it useful to display representations that represent various transactional accounts, financial accounts, purchase elements, and/or the like on the apparatus. In this manner, the user may select various display elements to modify, initiate, and/or the like various payment transactions.

The example of FIGURE 4A illustrates apparatus 400 comprising a display. In the example of FIGURE 4A, the display of apparatus 400 is displaying financial account representations 402, 404, and 406. A financial account representations may refer to a visual representation configured to visually designate a particular financial account. In this manner, a user may distinguish a particular financial account representation as representative of particular financial account, distinct from a different financial account. For example, it can be seen that the financial account "bank" represented by purchase element 402 is distinct from the purchase element "credit" represented by purchase element 404. Even though financial account representations 402, 404, and 406 are illustrated as textual information in the example of FIGURE 4A, it should be understood that financial account representations are not limited to textual information. For example, a financial account representation may be rendered as graphical information, color information, icon information, symbol information, and/or the like. In at least one example embodiment, an apparatus causes display, on a display, of a financial account representation that represents a financial account.

In the example of FIGURE 4A, the display of apparatus 400 is displaying purchase element representations 408A, 408B, 408C, and 408D. A purchase element representation may refer to a visual representation configured to visually designate a particular purchase element. In this manner, a user may distinguish a particular purchase element representation as representative of particular purchase element, distinct from a different purchase element. For example, it can be seen that the purchase element "milk" represented by purchase element 408A is distinct from the purchase element "beer" represented by purchase element 408B. Purchase element representations may comprise purchase identifier representations, purchase amount, representations, and/or the like. A purchase identifier representation may refer to a visual representation configured to visually designate a particular purchase element type. A purchase identifier representation may refer to a visual representation configured to visually designate a particular purchase element cost, price, purchase amount, and/or the like. For example, purchase element representation 408A comprises a purchase identifier representation "milk" and a purchase amount representation "$1.20." In this manner, a user may view purchase element representation 408A, and understand that purchase element representation 408A is representative of a "milk" purchase item for a purchase amount of $1.20. Even though purchase element representations 408A, 408B, 408C, and 408D are illustrated as textual information in the example of FIGURE 4A, it should be understood that purchase element representations are not limited to textual information. For example, a purchase element representation may be rendered as graphical information, color information, icon information, symbol information, and/or the like. In at least one example embodiment, an apparatus causes display, on a display, of a purchase element representation that represents a purchase element.

In the example of FIGURE 4A, the display of apparatus 400 is displaying purchase element total amount representation 409. A purchase element total amount representation may refer to a visual representation configured to visually designate the sum of purchase element costs, prices, purchase amounts, and/or the like, for purchase elements that are lacking association with a particular financial account. In the example of FIGURE 4A, purchase element total amount representation 409 is representative of the combined purchase price of the purchase elements represented by purchase element representations 408A, 408B, 408C, and 408D. It should be understood in the example of FIGURE 4A that purchase element representations 408A, 408B, 408C, and 408D are not associated with financial account representations 402, 404, or 406.

In some circumstances, it may be desirable to display a financial account representation separately from a purchase element representation. For instance, a user may recognize that a purchase element representation displayed separately from a financial representation is representative of a purchase element that has not been designated for funding by a financial account. For example, it can be seen in FIGURE 4A that purchase element representation 408A is displayed separately from financial account representation 402. In this manner, a user of apparatus 400 may see that the purchase element represented by purchase element 408A is not currently designated to be funded from the financial account represented by financial account representation 402 in the example of FIGURE 4A. In at least one example embodiment, a financial account representation is displayed separately from a purchase element representation.

In some circumstances, particular positioning of a financial account representations on a display may suggest a priority to the user. For example, if the financial account representations are displayed as a list, the user may interpret the financial account representation at the top of the list as having priority over those below it. In circumstances such as these, it may be desirable to display financial account representations in a manner that fails to suggest a priority. For example, each financial account representation may be displayed separately at different edges of the display. For example, it can be seen in the example of FIGURE 4A that financial account representation 402 is displayed near the top edge of the display, financial account representation 404 is displayed near the left edge of the display, and financial account representation 406 is displayed near the right edge of the display. Such placement of financial account representations may reduce user errors that may occur in circumstances where financial account representations are displayed adjacent to each other. For example, it may be more difficult for a user to view, select, and/or the like an incorrect financial account representation. Even though financial account representations 402, 404, and 406 are illustrated as displayed at particular display edges in the example of FIGURE 4A, it should be understood that financial account representations are not associated with a particular region of the display. For example, financial account representation 402 may be displayed near the bottom edge of the display of apparatus 400, near the center of the display of apparatus 400, and/or the like. In this manner, a predetermined region of display 400 may fail to be associated with a particular financial account.

In circumstances where a financial account representation is displayed near an edges of a display, it may be desirable to display the financial account representation in a manner that the financial account representation is displayed between the edge of the display and a purchase element representation. In this manner, the user may determine that the purchase element represented by the purchase element representation is not associated with the financial account represented by the financial account representation. For instance, it can be seen in the example of FIGURE 4A that financial account representation 402 is displayed between purchase element representation 408A and the top edge of the display. In this manner, a user of apparatus 400 may determine that financial account representation 402 is not associated with purchase element representation 408A in the example of FIGURE 4A. In contrast, if purchase element representation 408A were positioned between the top edge of the display and financial account representation 402, the user may interpret financial account representation 402 as associated with purchase element representation 408A. In at least one example embodiment, an apparatus causes display of a financial account representation that represents a financial account such that the financial account representation is displayed between a purchase element representation and an edge of the display.

As previously described, a user may wish to designate that a particular purchase element be funded by a particular financial account. It may be desirable to perform such a designation by way of a drag input. For example, a user may find a drag input to be an intuitive manner to associate a particular financial account with a particular purchase element. For example, associating a particular financial account with a particular purchase element by way of a drag input may be less error prone than selecting a financial account representation from a scrollable list.

A drag input may refer to an input comprising a selection input, a movement input, and a deselection input. For example, a drag input may be a touch input, a hover input, and/or the like comprising a selection input, a movement input, and a deselection input. For instance, a user may select a purchase element representation by way of a selection input (e.g. touching the display, hovering the display, etc. at a position that corresponds with the position of the purchase element representation on the display), move the purchase element representation to a location corresponding to the location of a financial account representation by way of a movement input (e.g. moving a finger across, over, etc. the display), and associate the financial account representation with the purchase account representation by way of a deselection input (e.g. removing a finger from the display, from hovering over the display, etc.). In this manner, the selection input may correspond with the purchase element representation, and the deselection input may correspond with the financial account representation. In at least one example embodiment, a drag input comprise a selection input, a movement input, and a deselection input. In at least one example embodiment, a drag input is absent at least one of a cursor, a menu, and/or a drop down menu.

The example of FIGURE 4B illustrates user 401 performing a drag input on apparatus 400. In the example of FIGURE 4B, it should be understood that user 401 previously performed a selection input on purchase element 408A, and moved purchase element 408A to the position illustrated in the example of FIGURE 4B. In the example of FIGURE 4B, user 401 may associate purchase element 408A with financial account 402 by performing a deselection input. In at least one example embodiment, an apparatus receives information indicative of a drag input from a purchase element representation to a financial account representation. In at least one example embodiment, an apparatus causes performance of a payment transaction, by way of a point of sale terminal, such that payment of a purchase element is funded by a financial account based, at least in part, on a drag input. For instance, in the example of FIGURE 4B, apparatus 400 may cause performance of a payment transaction such that a purchase element represented by purchase element representation 408A is funded by a financial account represented by financial account representation 402 based, at least in part, on the drag input being performed by user 401.

As previously described, a user of an apparatus may associate a purchase element representation with a financial account representation. For example, a user may associate a purchase element representation with a financial account representation by way of a drag input. In circumstances such as these, it may be desirable to terminate display of the purchase element representation. For example, a user may determine that the purchase element representation has been associated with a financial account representation by observing that display of the purchase element representation has terminated. In at least one example embodiment, an apparatus terminates display of a purchase element representation in response to a drag input.

In circumstances where display of a purchase element representation in response to a drag input, it may be desirable to display an indication that a financial account is associated with a purchase element. For example, a sum of purchase elements associated with a financial account may be displayed proximate to a financial account representation that represents the financial account. For example, the sum may be displayed below the financial account representation, above the financial account representation, overlaying at least a portion of the financial account representation, and/or the like. In this manner, a user may determine that a financial account is associated with purchase elements. In at least one example embodiment, an apparatus calculates a sum of each purchase amount for each purchase element that is associated with a financial account.

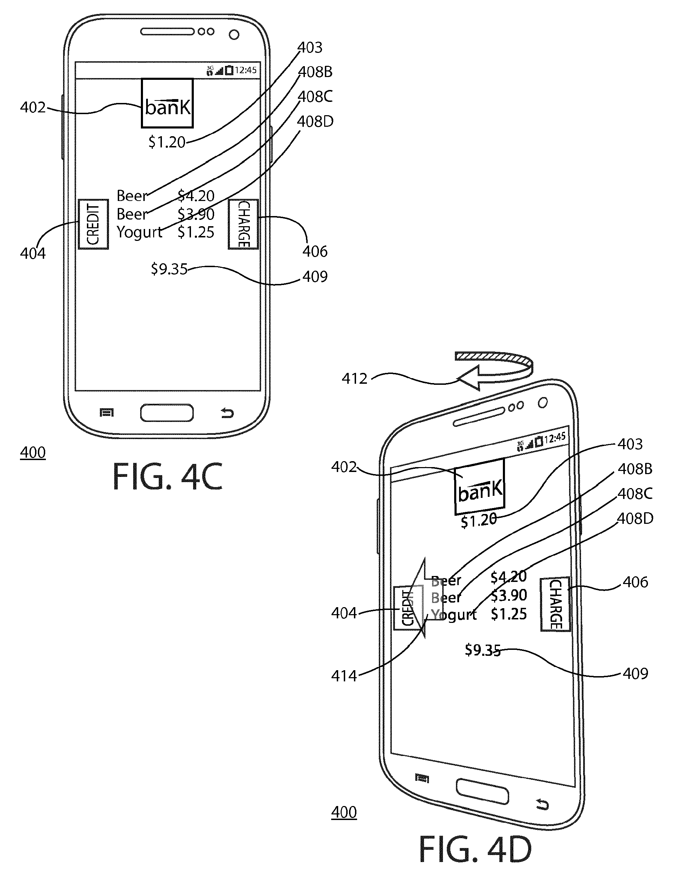

The example of FIGURE 4C illustrates a state of apparatus 400 based, at least in part, on the drag input described with regards to the example FIGURE 4B. In the example of FIGURE 4C, display of purchase element representation 408A has been terminated. In the example of FIGURE 4C, display 400 is displaying purchase element sum representation 403. A purchase element sum representation may refer to a visual representation configured to visually designate the sum of purchase element costs, prices, purchase amounts, and/or the like, for purchase elements that are associated with a particular financial account. It should be understood that in the example of FIGURE 4C, the purchase element represented by purchase element representation 408A has been associated with the financial account represented by financial account representation 402, and that purchase element sum representation 403 is representative of the purchase price of the purchase element represented by purchase element representation 408A. It can be seen in the example of FIGURE 4C that purchase element total amount representation 409 has been reduced by an amount equal to the purchase price associated with purchase element representation 408A. In this manner, a user of apparatus 400 may determine the remaining amount of funds that need to be allocated to complete the purchase of purchase elements associated with purchase element representations 408B, 408C, and 408D.

As previously described, a user may wish to designate that a particular purchase element be funded by a particular financial account. It may be desirable to perform such a designation by way of a tilt input. For example, a user may find a tilt input to be an intuitive manner to associate a particular financial account with a particular purchase element, to associate multiple purchase elements with a particular financial account, and/or the like. For example, associating a particular financial account with a particular purchase element by way of a tilt input may be less error prone than selecting a financial account representation from a scrollable list.

A tilt input may refer to an input based, at least in part, on a change in orientation of an apparatus. For example, if an apparatus is lying flat, the top portion of the apparatus may be tilted upward. In such an example, the tilting of the top portion of the apparatus upward may be indicative of an upward tilt input. In some circumstances, a tilt input may be indicative of a direction. For example, the previously described upward tilt input may be in a direction corresponding with the upward tilt. In at least one example embodiment, an apparatus receives information indicative of a tilt input. In at least on example embodiment, the tilt input corresponds with a direction.

The example of FIGURE 4D illustrates apparatus 400 receiving a tilt input corresponding with tilt direction 412. In the example of FIGURE 4D, apparatus 400 is displaying various representations and display elements in a manner similar as described in regards to FIGURE 4C. It should be understood that the tilt input of FIGURE 4D is a leftward tilt input. In the example of FIGURE 4D, the leftward tilt input is indicative of leftward direction 414. Leftward direction 414 is a direction toward the left edge of the display of apparatus 414. It can be seen that purchase element representations 408B, 408C, and 408D are rightward of the left edge of the display of apparatus 414, and rightward of financial account representation 404. In this manner, apparatus may associate at least one of purchase element representations 408B, 408C, and 408D with financial account representation 404 based, at least in part, on the leftward tilt input indicative of leftward direction 414. For example, apparatus 400 may only associate one of purchase element representations 408B, 408C, and 408D with financial account representation 404, apparatus 400 may associate each of purchase element representations 408B, 408C, and 408D with financial account representation 404, and/or the like. In at least one example embodiment, an apparatus receives information indicative of a tilt input towards an edge of a display. In at least one example embodiment, causation of performance of a payment transaction such that payment of a purchase element is funded by a financial account is based, at least in part, on a tilt input.

As previously described, an apparatus may associate one or multiple purchase element representations with a financial account representation based, at least in part, on a tilt input. In some circumstances, the number of purchase element representations associated with a financial account representation may be based, at least in part, on the angle of the tilt input. For example, if the tilt input is a tilt input with a small angle, the apparatus may associate only one purchase element representation with a financial account representation. In another example, if the tilt input is a tilt input with a large angle, the apparatus may associate multiple purchase element representations with a financial account representation. In some circumstances, the number of purchase element representations associated with a financial account may vary in proportion to the angle of the tilt input. For example, the apparatus may associated the purchase element representations with a financial account representation in a one by one manner, at a speed proportional to the tilt angle of the tilt input, and discontinue associating purchase element representations with a financial account representation upon termination of the tilt input.

In some circumstances, an apparatus may receive purchase element information corresponding to specific purchase elements in series, sequentially, and/or the like. For example, if a user is purchasing multiple items from a grocery, the apparatus may receive purchase element information as new purchase elements are registered with a point of sale terminal. In circumstances such as these, it may be desirable for the apparatus may display purchase elements in a "live update" manner. In this manner, purchase element representations are displayed as new purchase element information is received. In such an example, the user may then associate the purchase element representations with financial account representations as the purchase element representations are displayed. In this manner, completing the transaction is not unnecessarily delayed.

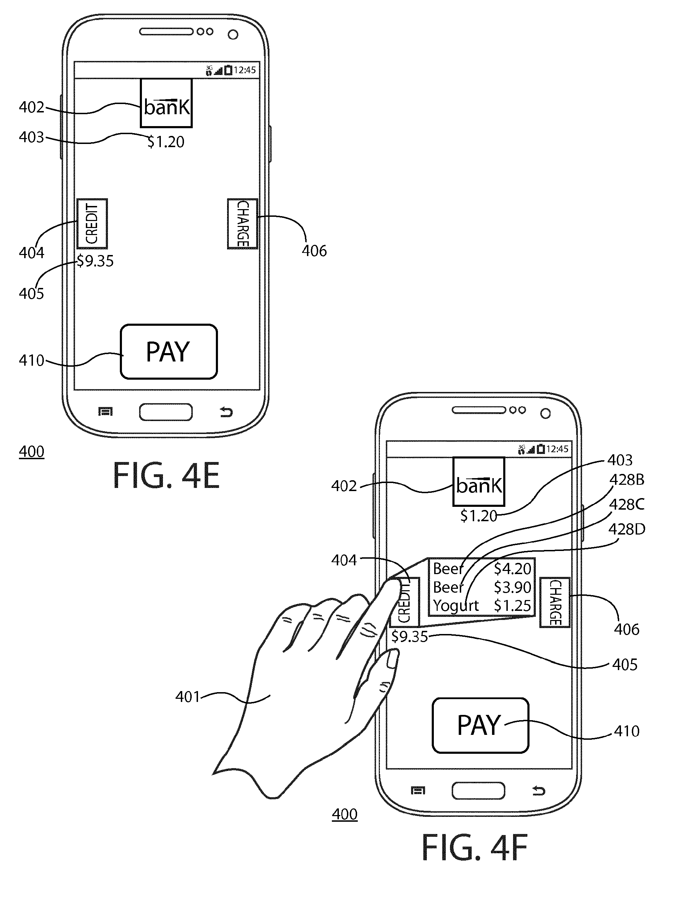

The example of FIGURE 4E illustrates a state of apparatus 400 based, at least in part, on the tilt input described with regards to the example FIGURE 4D. In the example of FIGURE 4E, display of purchase element representations 408B, 408C, 408D, and purchase element total amount representation 409 have been terminated. In the example of FIGURE 4E, display 400 is displaying purchase element sum representation 405. It should be understood that in the example of FIGURE 4E, the purchase elements represented by purchase element representations 408B, 408C, and 408D have been associated with the financial account represented by financial account representation 404, and that purchase element sum representation 405 is representative of the sum of the purchase prices of the purchase elements represented by purchase element representations 408B, 408C, and 408D. In the example of FIGURE 4E, display 400 is displaying payment interface element 410.

As previously described, an apparatus may receive information indicative of a payment performance input. In some circumstances, it may be intuitive for a user to enter a payment performance input by way of a payment interface element. For example, a user may touch a payment interface element displayed on a touch screen, hover over a payment interface element, perform a gesture associated with actuation of a payment interface element, and/or the like. In at least one example embodiment, receipt of a payment performance input comprises causation of display of a payment interface element, and receipt of information indicative of selection of the payment interface element. For instance, in the example of FIGURE 4E, a user of apparatus 400 may touch payment interface element 410 as a payment performance input.

As previously described, in some circumstances, display of a purchase element representation may be terminated. For example, display of a purchase element representation may be terminated in response to an association of the purchase element representation with a financial account representation by way of a drag input, a tilt input, and or the like. In circumstances such as these, it may be desirable to display a different purchase element representation, resume display of a previously displayed purchase element representation, and/or the like. For example, a user of the apparatus may wish to see what purchase items are associated with a particular financial account after they have been associated by way of a drag input, a tilt input, and/or the like. In circumstances such as these, a purchase element representation may be displayed in response to a financial account selection input. A financial account selection input may refer to an input configured to cause display of purchase element representations associated with a financial account. For example, a financial account selection input may be a touch input, a hover input, and/or the like that designates a financial account representation. In this manner, the apparatus may cause display of purchase element representations associated with the financial account represented by the financial account representation, based, at least in part, on the financial account selection input.

The example of FIGURE 4F illustrates user 401 performing a financial account selection input on apparatus 400 that designates the financial account represented by financial account representation 404. In the example of FIGURE 4F, apparatus 400 is displaying various representations and display elements in a manner similar as described in regards to FIGURE 4E. In the example of FIGURE 4F, apparatus 400 is displaying purchase element representations 428B, 428C, and 428D in response to the financial account selection input entered by user 401. It should be understood, in the example of FIGURE 4F, that purchase element representations 428B, 428C, and 428D represent purchase elements associated with the financial account represented by financial account representation 404. In at least one example embodiment, an apparatus cause display of a purchase element representation proximate to a financial account representation in response to a financial account selection input. In at least one example embodiment, causation of display of the purchase element representation is performed such that the purchase element representation at least partially overlays the financial account representation.

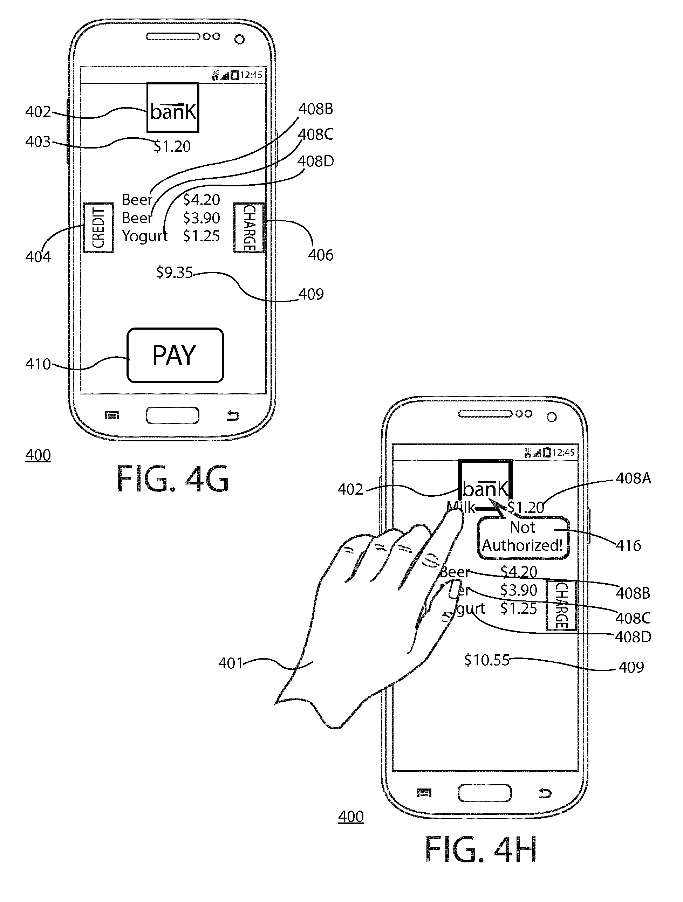

The example of FIGURE 4G illustrates apparatus 400 displaying various representations and display elements in a manner similar as described in regards to FIGURE 4C. In the example of FIGURE 4G, display 400 is displaying payment interface element 410.

As previously described, in some circumstances, a user may not have designated a particular financial account to fund at least part of a transaction. In circumstances such as these, the user may enter a payment performance input. For instance, in the example of FIGURE 4G, a user of apparatus 400 may touch payment interface element 410 as a payment performance input. In the example of FIGURE 4G, purchase element representations 408B, 408C, and 408D have not been associated with a financial account representation. In circumstances such as these, it may be desirable to associate the purchase elements represented by purchase element representations 408B, 408C, and 408D with at least one default financial account. In this manner, if a user enters a payment performance input, the purchase elements represented by purchase element representations 408B, 408C, and 408D will be funded by a payment transaction initiated by the payment performance input. In at least one example embodiment, an apparatus causes performance of a payment transaction such that payment of a purchase element is funded by a financial account absent any input that associates the purchase element with the financial account. In at least one example embodiment, causation of performance of the payment transaction such that payment of the purchase element is funded by at least one financial account is performed based, at least in part, on the financial account being a default financial account.

As previously described, in some circumstances a particular product element may not be authorized for payment by a particular financial account. For example, purchase of a hairstyling service may not be authorized for payment under a corporate budget, by a financial account associated with business expenses, and/or the like. In circumstances such as these, a user may attempt to associate a particular product with an unauthorized financial account for payment. In circumstances such as these, it may be desirable to alert the user that such an association is not authorized. The alert may be provided by various manners, such as by displaying an alert text and/or graphical icon, with tactile or sound input, by preventing the user from associating a particular purchase element with a particular financial account by way of a graphical user interface, and/or the like.

The example of FIGURE 4H illustrates user 401 performing a drag input on apparatus 400, similar as described regarding FIGURE 4B. In the example of FIGURE 4H, display 400 is displaying an authorization alert element 416. It should be understood that display 400 is displaying an authorization alert element 416 in response to the drag input. In this manner, user 401 may recognize that the purchase element represented by purchase element representation 408A is unauthorized for purchase with funds from the financial account represented by financial account representation 402. In this manner, the user may discontinue the attempted association of financial account representation 402 with purchase element representation 408A, or in some circumstances may override the authorization alert and continue with the association. In some example embodiments, overriding the authorization alert may be performed by the user by holding the purchase element representation 408A over the financial account representation 402 for a predetermined amount of time, after which the system makes the association despite the alert.

In some circumstances, a financial account may be a joint account held between a user of an apparatus and another person. In circumstances such as these, authorization for funding of a purchase element by the joint financial account may require authorization by the other person. In some circumstances, the other person may be unable to authorize funding of the purchase element in a timely manner. In circumstances such as these, a dual reservation system may be utilized. Under a dual reservation system, the purchase element may initially be funded simultaneously by the joint account, and another account, such as a default account. In circumstances where the other person fails to authorize funding of the purchase element by the joint account, the funding from the joint account is cancelled. Otherwise, the purchase element may be funded by the joint financial account upon approval from the other person, and funding from the other account (e.g. a default account) is cancelled. In this manner, the transaction may proceed without immediate authorization from the other person.

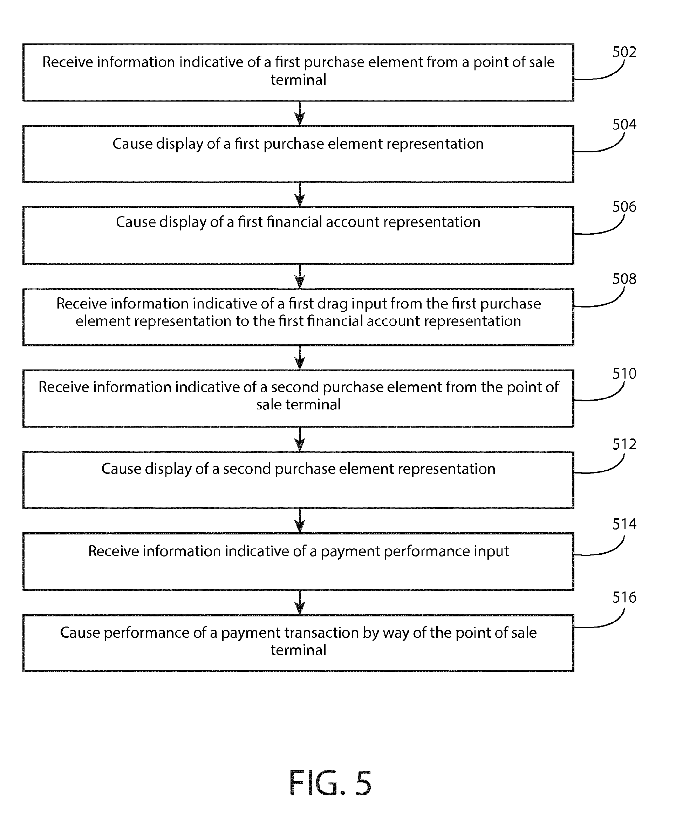

FIGURE 5 is a flow diagram illustrating activities associated with funding of a purchase element by a financial account according to at least one example embodiment. In at least one example embodiment, there is a set of operations that corresponds with the activities of FIGURE 5. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 5.

As previously described, a user may designate a particular purchase element to be funded by a particular financial account.

At block 502, the apparatus receives information indicative of a first purchase element from a point of sale terminal. The receipt, the information, the purchase element, and the point of sale terminal may be similar as described regarding FIGURE 1, FIGURES 2A-2B, FIGURES 3A-3C, and FIGURES 4A-4H.

At block 504, the apparatus causes display, on a display, of a first purchase element representation. The first purchase element representation represents a first purchase element. The display, the purchase element representation, and the purchase element may be similar as described regarding FIGURE 1, FIGURES 2A-2B, FIGURES 3A-3C, and FIGURES 4A-4H.

At block 506, the apparatus causes display of a first financial account representation. The first financial account representation represents a first financial account. The display, the financial account representation, and the financial account may be similar as described regarding FIGURE 1, FIGURES 2A-2B, FIGURES 3A-3C, and FIGURES 4A-4H.

At block 508, the apparatus receives information indicative of a first drag input from the first purchase element representation to the first financial account representation. The receipt and the drag input may be similar as described regarding FIGURE 1, and FIGURES 4A-4H.

At block 510, the apparatus receives information indicative of a second purchase element from the point of sale terminal. The receipt and the purchase element may be similar as described regarding FIGURE 1, FIGURES 2A-2B, FIGURES 3A-3C, and FIGURES 4A-4H.

At block 512, the apparatus causes display of a second purchase element representation. The second purchase element representation represents the second purchase element. The display, the purchase element representation, and the purchase element may be similar as described regarding FIGURE 1, FIGURES 2A-2B, FIGURES 3A-3C, and FIGURES 4A-4H.

At block 514, the apparatus receives information indicative of a payment performance input. The receipt and the payment performance input may be similar as described regarding FIGURE 1, and FIGURES 4A-4H.

At block 516, the apparatus causes performance of a payment transaction by way of the point of sale terminal. The causation of performance may be in response to the payment performance input. The performance of the payment transaction may be performed such that payment of the first purchase element is funded by the first financial account based, at least in part, on the first drag input and payment of the second purchase element is funded by a second financial account. The performance, the payment transaction, and the funding may be similar as described regarding FIGURE 1, FIGURES 2A-2B, and FIGURE 3A-3C.

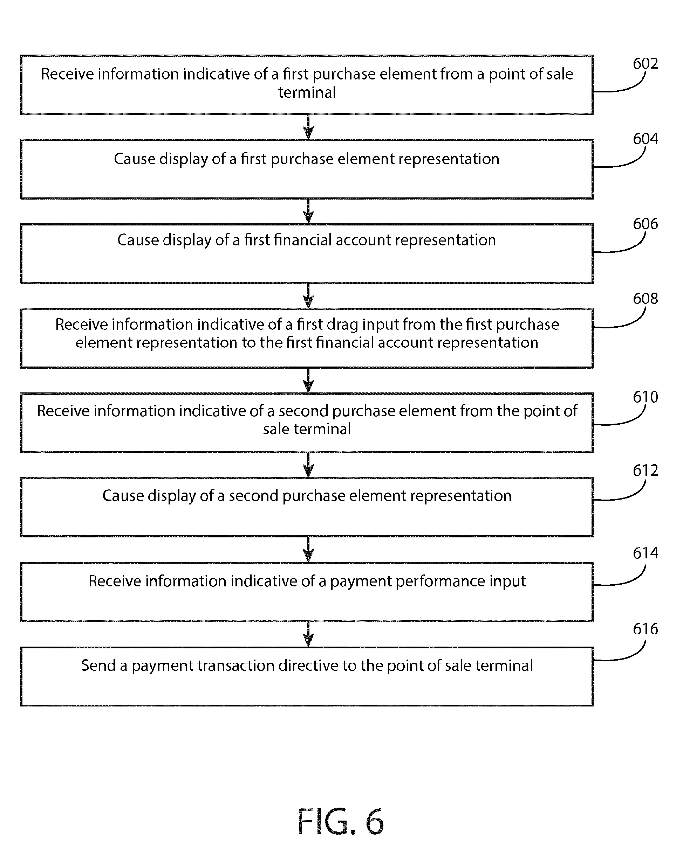

FIGURE 6 is a flow diagram illustrating activities associated with sending a payment transaction directive according to at least one example embodiment. In at least one example embodiment, there is a set of operations that corresponds with the activities of FIGURE 6. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 6.

As previously described, in some circumstances an apparatus may send a payment transaction directive to a point of sale terminal.

At block 602, the apparatus receives information indicative of a first purchase element from a point of sale terminal, similarly as described regarding block 502 of FIGURE 5. At block 604, the apparatus causes display, on a display, of a first purchase element representation, similarly as described regarding block 504 of FIGURE 5. At block 606, the apparatus causes display of a first financial account representation, similarly as described regarding block 506 of FIGURE 5. At block 608, the apparatus receives information indicative of a first drag input from the first purchase element representation to the first financial account representation, the apparatus, similarly as described regarding block 508 of FIGURE 5. At block 610, the apparatus receives information indicative of a second purchase element from the point of sale terminal, similarly as described regarding block 510 of FIGURE 5. At block 612, the apparatus causes display of a second purchase element representation, similarly as described regarding block 512 of FIGURE 5. At block 614, the apparatus receives information indicative of a payment performance input, similarly as described regarding block 514 of FIGURE 5.

At block 616, the apparatus sends a payment transaction directive to the point of sale terminal. The sending of the payment transaction directive may be in response to the payment performance input. The payment transaction directive may designate payment for the first purchase element from the first financial account based, at least in part, on the first drag input, and may designate payment for the second purchase element from the second financial account. In this manner, sending of the payment transaction directive causes performance of a payment transaction. The sending and the payment transaction directive may be similar as described regarding FIGURES 2A-2B and FIGURES 3A-3C.

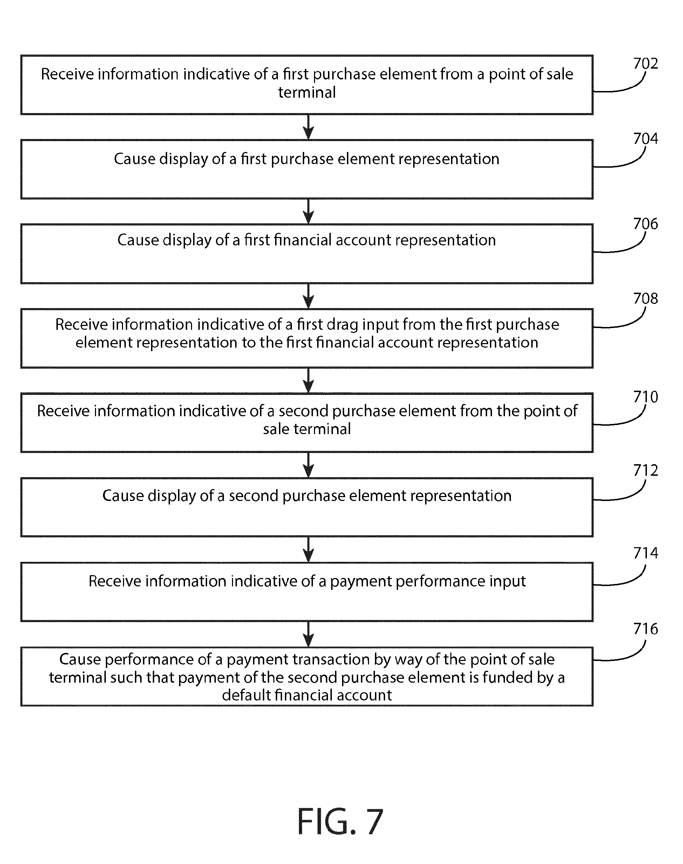

FIGURE 7 is a flow diagram illustrating activities associated with funding of a purchase element by a default financial account according to at least one example embodiment. In at least one example embodiment, there is a set of operations that corresponds with the activities of FIGURE 7. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 7.

As previously described, in some circumstances, a purchase element may be funded by a default financial account.

At block 702, the apparatus receives information indicative of a first purchase element from a point of sale terminal, similarly as described regarding block 502 of FIGURE 5. At block 704, the apparatus causes display, on a display, of a first purchase element representation, similarly as described regarding block 504 of FIGURE 5. At block 706, the apparatus causes display of a first financial account representation, similarly as described regarding block 506 of FIGURE 5. At block 708, the apparatus receives information indicative of a first drag input from the first purchase element representation to the first financial account representation, the apparatus, similarly as described regarding block 508 of FIGURE 5. At block 710, the apparatus receives information indicative of a second purchase element from the point of sale terminal, similarly as described regarding block 510 of FIGURE 5. At block 712, the apparatus causes display of a second purchase element representation, similarly as described regarding block 512 of FIGURE 5. At block 714, the apparatus receives information indicative of a payment performance input, similarly as described regarding block 514 of FIGURE 5.

At block 716, the apparatus causes performance of a payment transaction by way of the point of sale terminal. The causation of performance may be in response to the payment performance input. The performance of the payment transaction may be performed such that payment of the first purchase element is funded by the first financial account based, at least in part, on the first drag input and payment of the second purchase element is funded by a second financial account. The second financial account may be a default financial account. In this manner, causation of performance of the payment transaction such that payment of the second purchase element is funded by the second financial account is performed may be based, at least in part, on the second financial account being the default financial account The performance, the payment transaction, the default financial account, and the funding may be similar as described regarding FIGURE 1, FIGURES 2A-2B, and FIGURES 3A-3C.

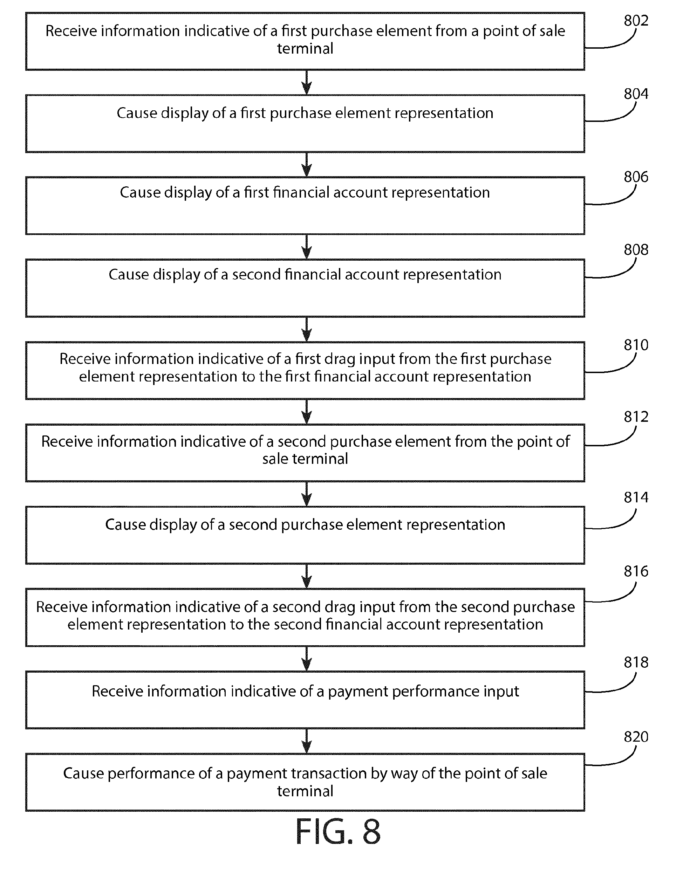

FIGURE 8 is a flow diagram illustrating activities associated with display of a financial account representation according to at least one example embodiment. In at least one example embodiment, there is a set of operations that corresponds with the activities of FIGURE 8. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 8.

As previously described, in some circumstances, an apparatus may cause display of a financial account representation.

At block 802, the apparatus receives information indicative of a first purchase element from a point of sale terminal, similarly as described regarding block 502 of FIGURE 5. At block 804, the apparatus causes display, on a display, of a first purchase element representation, similarly as described regarding block 504 of FIGURE 5. At block 806, the apparatus causes display of a first financial account representation, similarly as described regarding block 506 of FIGURE 5.

At block 806, the apparatus causes display of a second financial account representation. The second financial account representation represents a second financial account. The display, the financial account representation, and the financial account may be similar as described regarding FIGURE 1, FIGURES 2A-2B, FIGURE 3A-3C, and FIGURES 4A-4H.

At block 810, the apparatus receives information indicative of a first drag input from the first purchase element representation to the first financial account representation, the apparatus, similarly as described regarding block 508 of FIGURE 5. At block 812, the apparatus receives information indicative of a second purchase element from the point of sale terminal, similarly as described regarding block 510 of FIGURE 5. At block 814, the apparatus causes display of a second purchase element representation, similarly as described regarding block 512 of FIGURE 5.

At block 816, the apparatus receives information indicative of a second drag input from the second purchase element representation to the second financial account representation. The receipt and the drag input may be similar as described regarding FIGURE 1, and FIGURES 4A-4H. At block 818, the apparatus receives information indicative of a payment performance input, similarly as described regarding block 514 of FIGURE 5.

At block 820, the apparatus causes performance of a payment transaction by way of the point of sale terminal. The causation of performance may be in response to the payment performance input. The performance of the payment transaction may be performed such that payment of the first purchase element is funded by the first financial account based, at least in part, on the first drag input and payment of the second purchase element is funded by a second financial account based, at least in part, on the second drag input. The performance, the payment transaction, and the funding may be similar as described regarding FIGURE 1, FIGURES 2A-2B, and FIGURES 3A-3C.

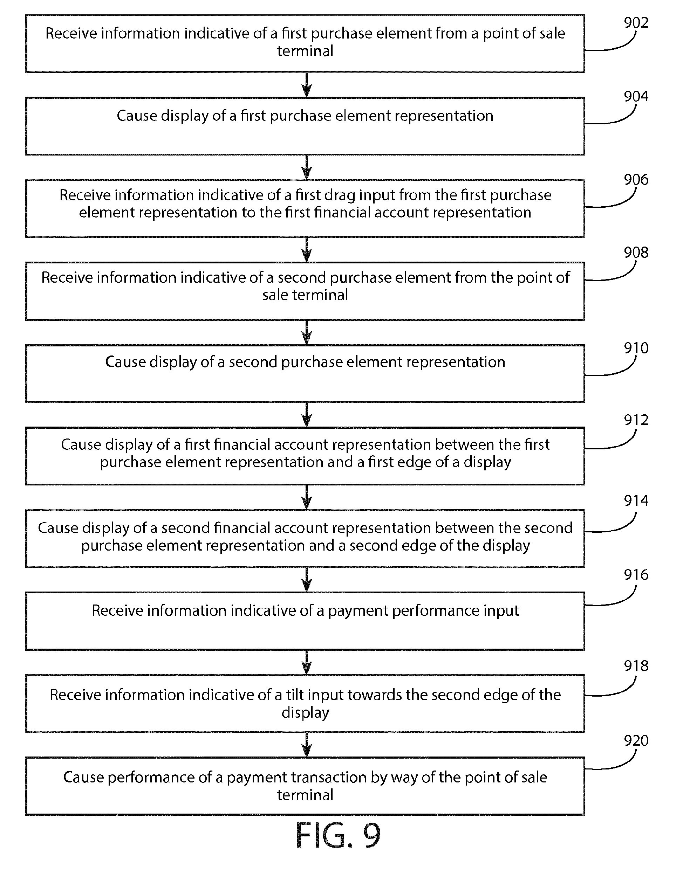

FIGURE 9 is a flow diagram illustrating activities associated with receipt of a tilt input according to at least one example embodiment. In at least one example embodiment, there is a set of operations that corresponds with the activities of FIGURE 9. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 9.

As previously described, in some circumstances an apparatus may receive a tilt input.

At block 902, the apparatus receives information indicative of a first purchase element from a point of sale terminal, similarly as described regarding block 502 of FIGURE 5. At block 904, the apparatus causes display, on a display, of a first purchase element representation, similarly as described regarding block 504 of FIGURE 5. At block 906, the apparatus receives information indicative of a first drag input from the first purchase element representation to the first financial account representation, the apparatus, similarly as described regarding block 508 of FIGURE 5. At block 908, the apparatus receives information indicative of a second purchase element from a point of sale terminal, similarly as described regarding block 510 of FIGURE 5. At block 910, the apparatus causes display of a second purchase element representation, similarly as described regarding block 512 of FIGURE 5.

At block 912, the apparatus causes display of a first financial account representation, such that the first financial account representation is displayed between the first purchase element representation and a first edge of the display. The first financial account representation represents a first financial account. The display, the edge of the display, the financial account representation, and the financial account may be similar as described regarding FIGURE 1, FIGURES 2A-2B, FIGURES 3A-3C, and FIGURES 4A-4H.

At block 914, the apparatus causes display of a second financial account representation, such that the second financial account representation is displayed between the second purchase element representation and a second edge of the display. The second financial account representation represents a second financial account. The display, the edge of the display, the financial account representation, and the financial account may be similar as described regarding FIGURE 1, FIGURES 2A-2B, FIGURES 3A-3C, and FIGURES 4A-4H.

At block 916, the apparatus receives information indicative of a payment performance input, similarly as described regarding block 514 of FIGURE 5.

At block 918, the apparatus receives information indicative of a tilt input towards the second edge of the display. The receipt and the tilt input may be similar as described regarding FIGURE 1 and FIGURES 4A-4H.

At block 920, the apparatus the apparatus causes performance of a payment transaction by way of the point of sale terminal. The causation of performance may be in response to the payment performance input. The performance of the payment transaction may be performed such that payment of the first purchase element is funded by the first financial account based, at least in part, on the first drag input and payment of the second purchase element is funded by a second financial account based, at least in part, on the tilt input. The performance, the payment transaction, and the funding may be similar as described regarding FIGURE 1, FIGURES 2A-2B, and FIGURE 3A-3C.

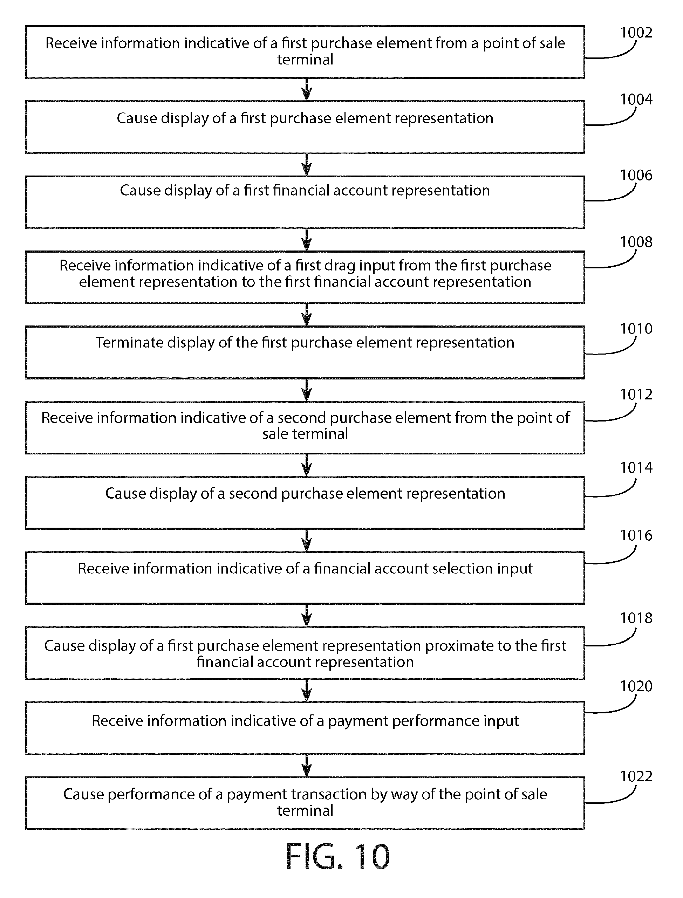

FIGURE 10 is a flow diagram illustrating activities associated with display of a purchase element representation according to at least one example embodiment. In at least one example embodiment, there is a set of operations that corresponds with the activities of FIGURE 10. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 10.

As previously described, in some circumstances an apparatus may display a purchase element representation.

At block 1002, the apparatus receives information indicative of a first purchase element from a point of sale terminal, similarly as described regarding block 502 of FIGURE 5. At block 1004, the apparatus causes display, on a display, of a first purchase element representation, similarly as described regarding block 504 of FIGURE 5. At block 1006, the apparatus causes display of a first financial account representation, similarly as described regarding block 506 of FIGURE 5. At block 1008, the apparatus receives information indicative of a first drag input from the first purchase element representation to the first financial account representation, the apparatus, similarly as described regarding block 508 of FIGURE 5.

At block 1010, the apparatus terminates display of the first purchase element representation in response to the first drag input. The termination may be similar as described regarding FIGURES 4A-4H.

At block 1012, the apparatus receives information indicative of a second purchase element from the point of sale terminal, similarly as described regarding block 510 of FIGURE 5. At block 1014, the apparatus causes display of a second purchase element representation, similarly as described regarding block 512 of FIGURE 5.

At block 1016, the apparatus receives information indicative of a financial account selection input, such that the financial account selection input designates the first financial account representation. The receipt, the financial account selection input, and the designation may be similar as described regarding FIGURE 1 and FIGURES 4A-4H.

At block 1018, the apparatus causes display of a first purchase element representation proximate to the first financial account representation. The causation of display may be in response to the financial account selection input. The display and the first purchase element representation may be similar as described regarding FIGURE 1, FIGURES 2A-2B, FIGURES 3A-3C, and FIGURES 4A-4H.

At block 1020, the apparatus receives information indicative of a payment performance input, similarly as described regarding block 514 of FIGURE 5. At block 1022, the apparatus causes performance of a payment transaction by way of the point of sale terminal, similarly as described regarding block 516 of FIGURE 5.

Embodiments of the invention may be implemented in software, hardware, application logic or a combination of software, hardware, and application logic. The software, application logic, and/or hardware may reside on the apparatus, a separate device, or a plurality of separate devices. If desired, part of the software, application logic, and/or hardware may reside on the apparatus, part of the software, application logic and/or hardware may reside on a separate device, and part of the software, application logic, and/or hardware may reside on a plurality of separate devices. In an example embodiment, the application logic, software or an instruction set is maintained on any one of various conventional computer-readable media.

If desired, the different functions discussed herein may be performed in a different order and/or concurrently with each other. For example, block 604 of FIGURE 6 may be performed after block 606 of FIGURE 6. Furthermore, if desired, one or more of the above-described functions may be optional or may be combined. For example, block 604 of FIGURE 6 may be optional and/or combined with block 606 of FIGURE 6.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are variations and modifications which may be made without departing from the scope of the present invention as defined in the appended claims.

## Claims

1. A method comprising:
receiving information indicative of a first purchase element from a point of sale terminal;
causing display, on a display, of a first purchase element representation that represents the first purchase element;
causing display of a first financial account representation that represents a first financial account;
receiving information indicative of a first drag input from the first purchase element representation to the first financial account representation;
receiving information indicative of a second purchase element from the point of sale terminal;
causing display of a second purchase element representation that represents the second purchase element;
receiving information indicative of a payment performance input; and
in response to the payment performance input, causing performance of a payment transaction, by way of the point of sale terminal, such that payment of the first purchase element is funded by the first financial account based, at least in part, on the first drag input and payment of the second purchase element is funded by a second financial account.

2. The method of claim 1, wherein the causation of performance of the payment transaction comprises sending, to the point of sale terminal, of a payment transaction directive that designates payment for the first purchase element from the first financial account based, at least in part, on the first drag input, and designates payment for the second purchase element from the second financial account.

3. The method of any of claims 1-2, wherein the second financial account is a default financial account.

4. The method of claims 3, wherein causation of performance of the payment transaction such that payment of the second purchase element is funded by the second financial account is performed based, at least in part, on the second financial account being the default financial account.

5. The method of any of claims 1-4, further comprising:
causing display of a second financial account representation that represents the second financial account; and
receiving information indicative of a second drag input from the second purchase element representation to the second financial account representation, wherein performance of the payment transaction such that payment of the second purchase element is funded by the second financial account is based, at least in part, on the second drag input.

6. The method of any of claims 1-5, further comprising causing display of a second financial account representation that represents the second financial account such that the second financial account representation is displayed between the second purchase element representation and a second edge of the display, wherein causation of display of the first financial account representation is performed such that the first financial account representation is displayed between the first purchase element representation and a first edge of the display.

7. The method of claim 6, further comprising receiving information indicative of a tilt input towards the second edge of the display, wherein causation of performance of the payment transaction such that payment of the second purchase element is funded by the second financial account is based, at least in part, on the tilt input.

8. The method of any of claims 1-8, further comprising terminating display of the first purchase element representation in response to the first drag input.

9. The method of claim 8, further comprising:
receiving information indicative of a financial account selection input that designates the first financial account representation; and
causing display of a first purchase element representation proximate to the first financial account representation in response to the financial account selection input.

10. The method of any of claims 1-9, wherein the first drag input comprises a selection input, a movement input, and a deselection input.

11. The method of claim 10, wherein the selection input corresponds with the first purchase element representation, and the deselection input corresponds with the first financial account representation.

12. The method of any of claims 1-11, wherein the causation of performance of the payment transaction comprises sending, to the point of sale terminal, of a payment transaction directive that designates payment for the first purchase element from the first financial account based, at least in part, on the first drag input, and designates payment for the second purchase element from the second financial account.

13. An apparatus comprising means for performing the method of any of the preceding claims.

14. The apparatus of Claim 13, wherein the means for performing the method comprise at least one processor and at least one memory, the memory comprising machine-readable instructions, that when executed cause the apparatus to perform the method of any of claims 1-12.

15. At least one computer readable medium comprising instructions that, when executed, perform the method of any of claims 1-12.
